# EUROPEAN PATENT SPECIFICATION

(11) **EP 3 233 306 B1**
(45) Date of publication and mention of the grant of the patent: **03.11.2021**
(21) Application number: 15868712.9
(22) Date of filing: 18.12.2015
(51) Int. Cl.: B29C 44/46, B05D 1/26, B29C 44/32, B32B 5/20, B32B 7/04, B05C 5/02, B05D 1/34

(54) **CASTING BAR FOR USE IN MANUFACTURE OF COMPOSITE PANELS**
GIESSSTEG ZUR VERWENDUNG BEI DER HERSTELLUNG VON VERBUNDPLATTEN
BARRE DE COULÉE À UTILISER DANS LA FABRICATION DE PANNEAUX COMPOSITES

(30) Priority: 18.12.2014 AU 2014905132
(43) Date of publication of application: 25.10.2017
(73) Proprietor: Metecno Pty Ltd., Acacia Ridge, Queensland 4110 (AU)
(72) Inventor: RICHMAN, Colin, Queensland 4069 (AU); VILAYSACK, John, Sunnybank, Queensland 4109 (AU); ZUTA, Reinhard, D-56348 Bornich (DE); MCINTOSH, Randall, Sunnybank Hills, Queensland 4109 (AU)
(74) Representative: Kutzenberger Wolff & Partner
(86) International application number: PCT/AU2015/050808
(87) International publication number: WO 2016/094957

(56) References cited:
- EP-A1- 2 614 943
- EP-A2- 1 066 944
- DE-A1- 19 757 678
- US-A- 4 945 854
- US-A1- 2006 153 991
- US-A1- 2010 080 900
- US-B2- 8 852 691

## Description

### FIELD OF INVENTION

The present invention relates to an apparatus for delivering a reaction mixture to a surface. More particularly this invention relates to producing composite panels made from a foam layer and two covering layers.

### BACKGROUND TO THE INVENTION

Any reference to background art herein is not to be construed as an admission that such art constitutes common general knowledge in Australia or elsewhere.

Known composite panels comprise two covering layers and a foam layer. These panels have become widely used in the construction industry. Composite panels are durable, aesthetically pleasing, easily transported and can be easily installed. Advantages of composite panels over other materials such as wood, steel and concrete, are that they are relatively cheap and have excellent insulation properties. Composite panels are frequently used in the construction of production halls, airports, exhibition halls, cold rooms and plants. Further to this, composite panels can also be produced quickly and in the desired size and quantity.

The properties of these composite panels may be altered by changing the material of the outer layer and/or the foam layer; changes in the outer layer can provide properties such as vapour resistance or additional strength; whereas a change in the foam layer can alter the thermal insulation properties.

A problem associated with composite panels is that the distribution of the foam layer can be uneven leading to the formation of voids. These voids may affect the strength and insulation properties of the composite panels. Typically the foam layer is made from foam of polyurethane (PUR), polyisocyanurate (PIR) or polystyrene (PS).

A typical process for producing composite panels uses a casting bar (sometime referred to as a poker) to apply a foam mixture to a desired surface. A foam-producing reaction mixture is delivered to one end of the casting bar from a distribution manifold. Typical casting bars are circular in shape along the length, with no change in radius. This assembly results in reduced pressure in orifices at the distil end (away from the distribution manifold) compared to near orifices (close to the distribution manifold). This decrease in pressure results in more foam-producing reaction mixture being delivered at the near end of the casting bar compared to the distal end. Typical methods to overcome these problems are to change the diameter or shape of the orifices and/or decrease the space between the orifices as they approach the distal end of the casting bar.

One prior art example that attempts to alleviate these problems is found in International Patent Publication WO2008/104492 assigned to BASF SE. This patent describes a process and apparatus for the manufacture of composite panels and utilizes a casting bar to apply a reaction mixture to a surface. The apparatus comprises a fixed tube which is provided with orifices and the diameter of the tube decreases from the middle of the tube to the end of the tube.

Another prior art example is found in International Patent Publication WO2009/077490 assigned to BASF SE. This patent describes an alternate arrangement to that of WO2008/104492 and notes that it is not preferred to decrease the diameter of the casting bar tube along its length. Instead an arrangement is described in which the outlets from the casting bar vary in length from one end of the casting bar to the other.

EP 1 066 944 A2 discloses a casting bar according to the preamble of claim 1 and a method according to the preamble of claim 14.

It would be advantageous to find an alternate product and process that minimizes the voids in the foam layer and provides an even distribution of the foam.

### SUMMARY OF INVENTION

In a first aspect, although it needs not be the only or indeed the broadest form, the invention resides in a casting bar for delivering a foam-producing reaction mixture to a surface comprising:
an inlet;
a bore formed along a length of the casting bar and in fluid communication with the inlet, wherein a cross-section of the bore is substantially circular near the inlet and gradually becomes substantially elliptical as it approaches an end away from the inlet; and
orifices in the casting bar on a side facing the surface.

The ends of the casting bar may be tapered and must be closed. The tapered end is at an angle suitably from 30º to 60º, and preferably selected from 35°, 40°, 45°, 50°, 55°, or 60° and most suitably selected about 45°. By "about 45°" it is meant that the angle is nominally 45° but the angle may vary from this precise angle to an unimportant degree.

The casting bar can be made from one or a combination of materials selected from the group comprising polyvinyl chloride, polyethylene, polyamine, acrylonitrile butadiene styrene, steel and stainless steel.

The apparatus further comprises a distribution manifold that delivers foam-producing reaction mixture to the inlet. The casting bar is preferably removably attached to the distribution manifold.

The distribution manifold may be connected to a single casting bar extending across the surface. Alternately the distribution manifold may be connected to a pair of casting bars spanning the surface.

In the case of a single casting bar the length of the casting bar from end to end may be from 200mm to 1000mm depending on the size of the composite panel. Preferably the length is selected from 200mm, 300 mm, 400mm, 500mm, 600mm, 700mm, 800mm, 900mm, or 1000mm. The length of the casting bar may vary from these precise lengths to an unimportant degree.

In the case of a pair of casting bars with a central distribution manifold each casting bar is suitably of the same length and typically half the sizes mentioned above.

The number of orifices in the casting bar can range from suitably 2 to 40 for a single casting bar, and preferably selected from any number in this range. For a pair of casting bars each casting bar may have half this number. The orifices of the casting bar are preferably equidistant from neighbouring orifices and have the same diameter.

In the case of a pair of casting bars each casting bar may slope at an angle to the surface. Each casting bar may slope at angle such that the end nearest the edge of the surface is furthest from the surface and the other end is closer to the surface. The angle may be in the range from 0º (the casting bar parallel to the surface) to 30º. The angle of the casting bar may be any angle in this range, but specifically 0º or 20º.

In the case of a pair of casting bars there may be an angle between the casting bars. The angle may be 180º, that is to say the bores are coaxial. Alternatively the bores are not coaxial and the angle is suitably from 80º to about 180º, and suitably selected to be nominally 120º.

The foam-producing reaction mixture may be based on isocyanate and polyol, in particular a PUR or PIR system, such as those described in the prior art.

In a second aspect, the invention resides in a process for producing composite panels comprising a foam layer and two covering layers, including the steps of:
a) continuously moving a first covering layer through an application zone;
b) applying a foam-producing reaction mixture to a surface of the covering layer in the application zone from a casting bar, the casting bar having an inlet and comprising a bore formed along a length of the casting bar and in fluid communication with the inlet wherein a cross-section of the bore is substantially circular near the inlet and gradually becomes substantially elliptical as it approaches an end away from the inlet, and with orifices in a side facing the surface;
c) continuously moving a second covering layer through the application zone at a distance from the first covering layer, such that a space between the first covering layer and the second covering layer is filled with foam;
d) moving the covering layers filled with the foam to a curing area, where the foam cures and hardens to produce a composite panel with a foam core.

The process includes the further step of:
e) cutting the composite panel to the desired size and shape.

The step of applying a foam-producing reaction mixture to a surface of the covering layer in the application zone from a casting bar suitably includes delivering the foam-producing reaction mixture to the casting bar from a distribution manifold in fluid communication with a source of foam-producing reaction mixture.

Preferably the process uses two casting bars each oriented at an angle to the plane of the first covering layer such that the end nearest the edge of the surface is furthest from the surface and the other end is closer to the surface. The angle may be in the range from 0º (the casting bar parallel to the surface) to 30º. The angle of the casting bar may be any angle in this range, but specifically 0º or 20º.

The casting bars may also be orientated at an angle to the direction of movement of the covering layer suitably from 15º to 90º, but most suitably selected to be about 90º. By "about 90º" it is meant that the angle is nominally 90º but the angle may vary from this precise angle to an unimportant degree.

Further features and advantages of the present invention will become apparent from the following detailed description.

In this specification, words such as "comprise", "comprises", "comprising", or "include", "includes", "including" or "selected" are intended to define a non-exclusive inclusion, such that a process, method, article, or apparatus that comprises a list of elements does not include only those elements, but may include other elements not expressly listed, including elements that are inherent to such a process, method, article, or apparatus.

### BRIEF DESCRIPTION OF FIGS

FIG 1 is a perspective view of a casting bar for use in the manufacture of composite panels;
FIG 2 is a bottom view of the apparatus of FIG 1;
FIG 3 is a side view of the apparatus of FIG 1;
FIG 4 is a flow chart of a process of producing composite panels; and
FIG 5 shows a pair of casting bars connected to a distribution manifold.

### DETAILED ESCRIPTION OF THE INVENTION

The present invention relates to producing composite panels, in particular with improved distribution of the foam layer. The apparatus and steps for processing composite panels that are discussed herein are discussed with only sufficient specific detail necessary to understand the embodiments of the present invention, but not so as to obscure the disclosure with excessive detail that will be readily apparent to those of ordinary skill in the art having the benefit of the present description.

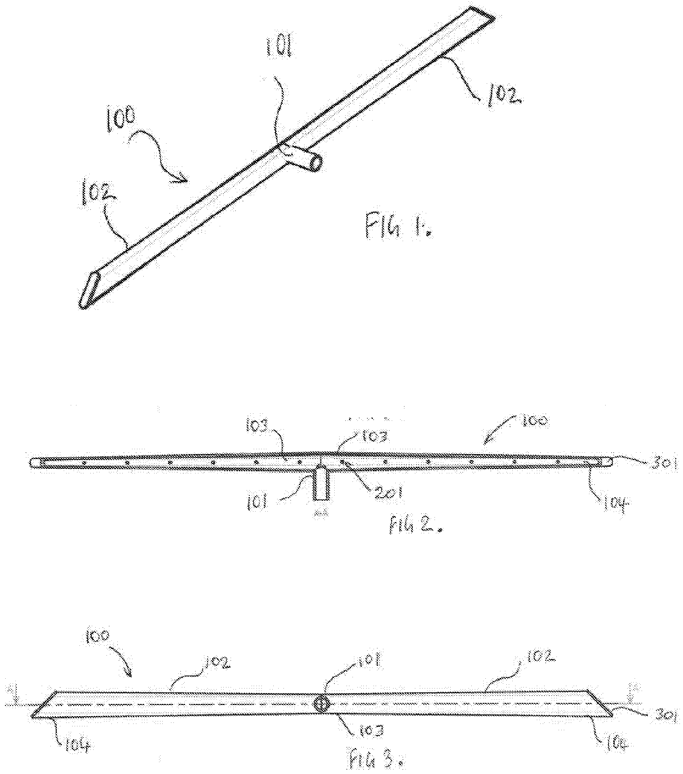

Referring to FIGs 1-3, there is shown a first embodiment of a casting bar 100 for delivering foam-producing reaction mixture to a surface. The apparatus 100 comprises an inlet 101 and two arms 102. The inlet 101 is suitably located at the middle of the casting bar 100. The casting bar 100 comprises an internal bore in fluid communication with the inlet 101. Each arm 102 is provided with orifices 201 on the side facing the surface to which the foam-producing reaction mixture is to be applied. The arrangement allows foam-producing reaction mixture to flow through the inlet 101, into the bore of the arms 102 and out through the orifices 201.

In an alternate embodiment (not shown) the apparatus is single-sided with the inlet 101 at one end of the casting bar 100. In this embodiment there is a single arm 102.

The inlet 101 can be a suit compression type fitting and can accommodate the pressure of the foam-producing reaction mixture. It will be appreciated that a person skilled in the art would understand that a suit compression type fitting is not the only embodiment of the inlet 101, but is used as an example to illustrate the type of fittings available. The inlet 101 connects to a distribution manifold 500, described below.

As shown in FIG 2 and FIG 3, a cross-section of the bore in each arm 102 is substantially circular at the end 103 near the inlet 101, but gradually becomes substantial elliptical as it approaches a distal end 104 away from the inlet 101. A cross-sectional change of shape alleviates a drop in pressure that is observed from the orifices at the distal end of the arm 102 compared to the near end. The cross-sectional change of shape maintains a substantially even pressure of foam-producing reaction mixture along the length of the arm 102 and alleviates the problems associated with the amount of foam-producing reaction mixture delivered, without having to rely on methods mentioned previously. As a result, the cross-sectional area and volume will decrease as it approaches the distal end of the arm 102; the degree of this decrease is inversely proportional to the pressure drop observed from the orifices 201 near the inlet 101 to the orifices 201 approaching the distal end 104 of the arm 102. The degree of this decrease will also be affected by the number and size of these orifices 201.

The distal end 104 of the arm 102 has a tapered end 301 and is closed. The tapered end is closed at an angle suitably from 30º to less than 90º, and preferably selected from 35º, 40º, 45º, 50º, 55º, 60º, 65º, 70º, 75º, 80º, or 85º and most suitably selected to be about 45°. By "about 45º" it is meant that the angle is nominally 45º but the angle may vary from this precise angle to an unimportant degree. The tapered end can be welded, crimped, glued or clamped.

Typical casting bars have a distal end that is terminated at a substantially 90º angle. This angle can lead to turbulence in the foam-producing reaction mixture, resulting from the foam-producing reaction mixture colliding with the closed distal end and being guided back into the flow of foam-producing reaction mixture from the inlet. This turbulence can lead to an uneven volume of foam-producing reaction mixture being delivered from the orifice and a premature reaction mixture which could result in a blockage of the orifices near the distil end of the casting bar. The casting bar of the present invention has tapered ends 301 to alleviate this problem.

The tapered ends 301 of the present invention alleviate the problem associated with turbulence and results in a better distribution of foam-producing reaction mixture because as the foam-producing reaction mixture collides with the tapered end 301 it is not guided directly back into the flow of the foam-producing reaction mixture from the inlet 101. The angle of the tapered end 301 allows the foam-producing reaction mixture to "slow down" before being directed back towards the flow from the inlet 101, and results in less turbulence. Further to this, the tapered ends 301 extend past the final orifice 201, so any turbulence caused is not directly above an orifice.

The arm 102 has a plurality of orifices 201. The number of orifices 201 can suitably range from 2 to 40, and may be any number within this range. The orifices 201 have the same diameter and it will be appreciated that the size of and the distance between the orifices 201 can be altered to match the amount of foam-producing reaction mixture to be delivered. It will also be appreciated that the distance between the orifices 201 will be constant in each apparatus but can change from apparatus to apparatus to suit the specific application.

The length of the casting bar 100 from distal end to distal end is suitably from 200mm to 1000mm, and preferably selected from 200mm, 300 mm, 400mm, 500mm, 600mm, 700mm, 800mm, 900mm, or 1000mm. The length selected depends on the width of the composite panel desired and may exceed 1000mm.

A typical apparatus is made from expensive starting materials and is therefore reused. One of the problems associated with this practice is that there is a build-up of dried foam-producing reaction mixture after production, whereas the manifold up to the casting bars is filled with dried foam. This build up will lead to the necessity to mechanically clean all parts of the distribution apparatus from the manifold to the casting bars. This cleaning process is not efficient and does not guarantee to obtain the same condition of the distribution apparatus as before the production. Further to this, residues of dried foam after cleaning may be dislodged by the foam-producing reaction mixture and this will affect the amount of foam-producing reaction mixture delivered.

The casting bar 100 of the present invention can be made of one or a combination of materials selected from a group comprising polyvinyl chloride, polyethylene, polyamine, acrylonitrile butadiene styrene, steel and stainless steel. With the use of some of these materials it is economically feasible to discard the casting bar 100 after use. The main advantage is the time saved from not having to clean the casting bar 100. Further to this, the disposability of the apparatus eliminates the possibility that the apparatus is not cleaned properly. It will be appreciated that this list is not exhaustive and the apparatus can be made from other materials known to those skilled in the art.

In one preferred embodiment, the casting bar 100 comprises a one piece casting bar with a centrally located inlet 101. The inlet 101 is substantially perpendicular in orientation to the single piece casting bar, as seen in Figs 1-3. By substantially perpendicular orientation it is meant that the angle is nominally 90º, but the angle may vary from this precise angle to an unimportant degree

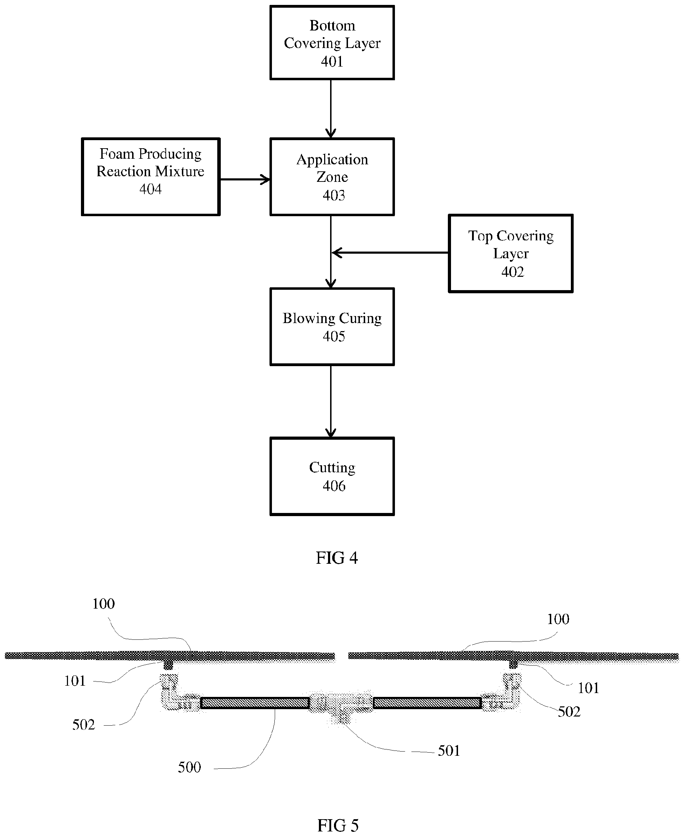

Referring to FIG. 4, there is shown a flow chart of a process for the manufacture of composite panels. A covering layer is stored in a covering layer supply which feeds the first covering layer 401 into the process and is continuously moved from the covering layer supply towards the foam application zone 403.

Foam-producing reaction mixture 404 is prepared and pumped to the application zone 403 through the inlet 101, it then travels into the arms 102 and is forced out of the orifices 201. A second covering layer 402 is fed to the process just after the application zone 403 so as to form a composite panel of a first covering layer 401, second covering layer 402 and intermediate foam producing reaction mixture 404.

The covering layer with foam-producing reaction mixture containing physical blowing agents produces a cellular structure in the foaming structure and undergoes a hardening phase. This cellular structure reduces the density and increases thermal insulation of the foam, whilst maintaining strength. The blowing agents have been classified into different groups such as physical blowing agents (CFC's, HCFC's. hydrocarbons, liquid CO₂) and chemical blowing agents (water and formic acid). It will be appreciated that a person skilled in the art would understand that the listed agents above are not an exhaustive list, but used as an example to illustrate the types of blowing agents available.

The composite panel is then moved to a curing area 405 to harden. The composite panel is continuously moved through the system to ensure the composite panels are constantly being made. These large continuous composite panels are then cut to commercial sizes in a cutting area 406. It will be appreciated that a person skilled in the art would understand that the composite panels may be made with one or more varying type of covering layers, where the foam-producing reaction mixture is applied between the first covering layer and the second covering layer.

In the preferred embodiment a pair of casting bars 100 is connected to a distribution manifold 500, as shown in FIG 5. The distribution manifold 500 has an inlet 501 that is connected to a source of foam-producing reaction mixture and a pair of outlets 502. Each outlet 502 is connected to an inlet 101 of a casting bar 100. The pair of casting bars 100 are preferably arranged in a substantially co-linear orientation. By substantially co-linear orientation it is meant that the angle between the casting bars 100 is nominally 0º, but the angle may vary from this precise angle to an unimportant degree.

The inlet 101 is suitably removably attachable to the distribution manifold outlet 502. One advantage of removably attachable casting bars is that the distribution manifold may be reused and the casting bars may be discarded.

In one alternate embodiment the casting bar 100 slopes with respect to the surface to which the foam-producing reaction mixture is applied. The end of the casting bar nearest the edge of the surface is furthest from the surface and the other end is closer to the surface. The angle may be in the range from 0º (the casting bar parallel to the surface) to 30º. The angle of the casting bar may be any angle in this range, but specifically 0º or 20º.

By sloping the casting bar 100 the outer orifices 201 direct foam beyond the end of the casting bar. This allows a pair of 500mm casting bars to be used to produce a composite panel of 1000mm, 1100mm or 1200mm by simply changing the angle. Instead of needing three different casting bars the outcome can be achieved by simply rotating the casting bars 100 on the distribution manifold outlets 502.

In another embodiment the casting bars may be angled with respect to the direction of movement of the surface. For example, each casting bar in FIG 5 may have the same but opposite angle so that an angle is formed between the casting bars. The angle may be 180º, that is to say the bores are coaxial. Alternatively the bores are not coaxial and the angle is suitably from 80º to about 180º, and suitably selected to be about 120º.

The apparatus and method of the present invention alleviates many problems associated with the production of a composite panel, in particular the problem of an uneven distribution of foam is alleviated and a higher quality product can be supplied. The inefficiency of cleaning the apparatus has also been addressed by the change in material making it economically viable to dispose of the apparatus after use. The turbulence observed in typical apparatuses has also been alleviated by the shape and structure of the distribution element and again helps with the distribution of the foam-producing reaction mixture.

## Claims

1. A casting bar (100) for delivering a foam-producing reaction mixture to a surface comprising:
an inlet (101);
a bore formed along a length of the casting bar (100) and in fluid communication with the inlet (101); and
orifices (201) in the casting bar (100) on a side facing the surface;
**characterised in that** a cross-section of the bore is substantially circular near the inlet (101) and gradually becomes substantially elliptical as it approaches an end (104) away from the inlet (101).

2. The casting bar (100) of claim 1 comprising two arms (102) with the inlet (101) in the middle between the two arms.

3. The casting bar (100) of claim 1 wherein an end (104) of the casting bar is tapered and closed (301), optionally wherein the end of the casting bar is tapered at an angle of from 30° to 60°, optionally an angle of nominally 45°.

4. The casting bar (100) of claim 1 wherein the length is from 200mm to 1000mm.

5. The casting bar (100) of claim 1 when made from one or a combination of materials selected from the group comprising: polyvinyl chloride; polyethylene; polyamine; acrylonitrile butadiene styrene; steel; and stainless steel.

6. The casting bar (100) of claim 1 wherein the number of orifices (201) is in the range from 2 to 40.

7. The casting bar (100) of claim 1 wherein the orifices (201) of the casting bar are equidistant from neighbouring orifices and have the same diameter.

8. An apparatus for delivering foam-producing reaction mixture to a surface comprising:
at least one casting bar of claim 1 and
a distribution manifold (500) for delivering foam-producing reaction mixture to the inlet (101).

9. The apparatus of claim 8 wherein the casting bar (100) is removably attached to the distribution manifold (500).

10. The apparatus of claim 8 including two casting bars (100) wherein the casting bars (100) slope relative to the surface such that an end of each casting bar nearest an edge of the surface is furthest from the surface and another end is closer to the surface.

11. The apparatus of claim 10 wherein the angle is in the range from 0° to 30°, optionally from 0° to 20°.

12. The apparatus of claim 8 including two casting bars (100) with an angle between the casting bars.

13. The apparatus of claim 12 wherein the angle is from 80° to about 180°, optionally wherein the angle is nominally 120°.

14. A process for producing composite panels comprising a foam layer and two covering layers, including the steps of:
a) continuously moving a first covering layer through an application zone;
b) applying a foam-producing reaction mixture to a surface of the covering layer in the application zone from a casting bar (100), the casting bar (100) having an inlet (101) and comprising a bore formed along a length of the casting bar (100) and in fluid communication with the inlet (101) and with orifices (201) in a side facing the surface;
c) continuously moving a second covering layer through the application zone at a distance from the first covering layer, such that a space between the first covering layer and the second covering layer is filled with foam;
d) moving the covering layers filled with the foam to a curing area, where the foam cures and hardens to produce a composite panel with a foam core the process optionally further including the step of:
(e) cutting the composite panel to the desired size and shape
**characterized in that** a cross section of the bore is substantially circular near the inlet (101) and gradually becomes substantially elliptical as it approaches an end (104) away from the inlet.

15. The process of claim 14 wherein the foam-producing reaction mixture is based on isocyanate and polyol.

## Patentansprüche

1. Gießstange (100) zum Zuführen eines schaumerzeugenden Reaktionsgemisch zu einer Oberfläche, umfassend:
einen Einlass (101);
eine Bohrung, die entlang der Länge der Gießstange (100) und in Fluidverbindung mit dem Einlass (101) gebildet ist; und
Öffnungen (201) in der Gießstange (100) an einer Seite, die zu der Oberfläche zeigt;
**dadurch gekennzeichnet, dass** der Querschnitt der Bohrung nahe dem Einlass (101) im Wesentlichen kreisförmig ist und bei Annäherung an ein Ende (104) entfernt von dem Einlass (101) allmählich im Wesentlichen elliptisch wird.

2. Gießstange (100) gemäß Anspruch 1, umfassend zwei Arme (102) mit dem Einlass (101) in der Mitte zwischen den beiden Armen.

3. Gießstange (100) gemäß Anspruch 1, wobei ein Ende (104) der Gießstange abgeschrägt und geschlossen (301) ist, wobei das Ende der Gießstange gegebenenfalls in einem Winkel von 30° bis 60°, gegebenenfalls einem Winkel von nominell 45°, abgeschrägt ist.

4. Gießstange (100) gemäß Anspruch 1, wobei die Länge von 200 mm bis 1000 mm beträgt.

5. Gießstange (100) gemäß Anspruch 1, bestehend aus einem oder einer Kombination von Materialien ausgewählt aus der Gruppe umfassend: Polyvinylchlorid; Polyethylen; Polyamin; Acrylnitril-Butadien-Styrol; Stahl; und rostfreien Stahl.

6. Gießstange (100) gemäß Anspruch 1, wobei die Anzahl von Öffnungen (201) in dem Bereich von 2 bis 40 liegt.

7. Gießstange (100) gemäß Anspruch 1, wobei die Öffnungen (201) der Gießstange von benachbarten Öffnungen äquidistant sind und den gleichen Durchmesser aufweisen.

8. Vorrichtung zum Zuführen eines schaumerzeugenden Reaktionsgemischs zu einer Oberfläche, umfassend: wenigstens eine Gießstange gemäß Anspruch 1 und
einen Verteiler (500) zum Zuführen von schaumerzeugendem Reaktionsgemisch zu dem Einlass (101).

9. Vorrichtung gemäß Anspruch 8, wobei die Gießstange (100) entfernbar an dem Verteiler (500) angebracht ist.

10. Vorrichtung gemäß Anspruch 8, umfassend zwei Gießstangen (100), wobei die Gießstangen (100) relativ zu der Oberfläche geneigt sind, so dass ein Ende jeder Gießstange nahe einem Rand der Oberfläche am weitesten von der Oberfläche entfernt ist und ein anderes Ende näher bei der Oberfläche liegt.

11. Vorrichtung gemäß Anspruch 10, wobei der Winkel in dem Bereich von 0° bis 30°, gegebenenfalls von 0° bis 20°, liegt.

12. Vorrichtung gemäß Anspruch 8, umfassend zwei Gießstäbe (100) mit einem Winkel zwischen den Gießstäben.

13. Vorrichtung gemäß Anspruch 12, wobei der Winkel von 80° bis etwa 180° beträgt, wobei der Winkel gegebenenfalls nominell 120° beträgt.

14. Verfahren zur Herstellung von Verbundplatten, die eine Schaumstoffschicht und zwei Deckschichten umfassen, umfassend die Schritte:
a) kontinuierliches Bewegen einer ersten Deckschicht durch eine Aufbringzone;
b) Aufbringen eines schaumerzeugenden Reaktionsgemischs auf eine Oberfläche der Deckschicht in der Aufbringzone aus einer Gießstange (100), wobei die Gießstange (100) einen Einlass (101) aufweist und eine Bohrung umfasst, die entlang der Länge der Gießstange (100) gebildet ist und in Fluidverbindung mit dem Einlass (101) und mit Öffnungen (201) in einer Seite, die zu der Oberfläche zeigt, steht;
c) kontinuierliches Bewegen einer zweiten Deckschicht durch eine Aufbringzone in einem Abstand von der ersten Deckschicht, so dass ein Raum zwischen der ersten Deckschicht und der zweiten Deckschicht mit Schaum gefüllt wird;
d) Bewegen der mit dem Schaum gefüllten Deckschichten in einen Härtungsbereich, in dem der Schaum härtet, um eine Verbundplatte mit einem Schaumstoffkern zu bilden,
wobei das Verfahren gegebenenfalls ferner den Schritt umfasst:
e) Schneiden der Verbundplatte auf die gewünschte Größe und Form,
**dadurch gekennzeichnet, dass** der Querschnitt der Bohrung nahe dem Einlass (101) im Wesentlichen kreisförmig ist und bei Annäherung an ein Ende (104) entfernt von dem Einlass allmählich im Wesentlichen elliptisch wird.

15. Verfahren gemäß Anspruch 14, wobei das schaumerzeugende Reaktionsgemisch auf Isocyanat und Polyol basiert.

## Revendications

1. Barre de coulée (100) pour fournir un mélange de réaction spumogène à une surface, comprenant :
une entrée (101) ;
un alésage formé le long d'une longueur de la barre de coulée (100) et en communication fluidique avec l'entrée (101) ; et
des orifices (201) dans la barre de coulée (100) sur un côté faisant face à la surface ;
**caractérisée en ce qu'**une section transversale de l'alésage est sensiblement circulaire près de l'entrée (101) et devient progressivement sensiblement elliptique au fur et à mesure qu'elle se rapproche d'une extrémité (104) éloignée de l'entrée (101).

2. Barre de coulée (100) selon la revendication 1, comprenant deux bras (102) avec l'entrée (101) au milieu entre les deux bras.

3. Barre de coulée (100) selon la revendication 1, dans lequel une extrémité (104) de la barre de coulée est inclinée et fermée (301), optionnellement dans lequel l'extrémité de la barre de coulée est inclinée à un angle de 30° à 60°, optionnellement un angle de nominalement 45°.

4. Barre de coulée (100) selon la revendication 1, dans lequel la longueur est de 200 mm à 1000 mm.

5. Barre de coulée (100) selon la revendication 1, lorsqu'elle est faite d'un ou d'une association de matériaux sélectionnés parmi le groupe comprenant :
chlorure de polyvinyle ; polyéthylène ; polyamine ; acrylonitrile butadiène styrène ; acier ; et acier inoxydable.

6. Barre de coulée (100) selon la revendication 1, dans lequel le nombre d'orifices (201) est dans la plage de 2 à 40.

7. Barre de coulée (100) selon la revendication 1, dans lequel les orifices (201) de la barre de coulée sont équidistants par rapport à des orifices voisins et ont le même diamètre.

8. Appareil pour fournir un mélange de réaction spumogène à une surface comprenant :
au moins une barre de coulée selon la revendication 1, et
un collecteur de distribution (500) pour fournir un mélange de réaction spumogène à l'entrée (101).

9. Appareil selon la revendication 8, dans lequel la barre de coulée (100) est attachée de façon amovible au collecteur de distribution (500).

10. Appareil selon la revendication 8, incluant deux barres de coulée (100), dans lequel les barres de coulée (100) sont en pente relativement à la surface de telle sorte qu'une extrémité de chaque barre de coulée la plus près d'un bord de la surface soit la plus éloignée de la surface et une autre extrémité soit plus près de la surface.

11. Appareil selon la revendication 10, dans lequel l'angle est dans la plage de 0° à 30°, optionnellement de 0° à 20°.

12. Appareil selon la revendication 8, incluant deux barres de coulée (100) avec un angle entre les barres de coulée.

13. Appareil selon la revendication 12, dans lequel l'angle est de 80° à environ 180°, optionnellement dans lequel l'angle est nominalement de 120°.

14. Procédé pour produire des panneaux composites comprenant une couche de mousse et deux couches de couverture, incluant les étapes de :
a) le déplacement continu d'une première couche de couverture à travers une zone d'application ;
b) l'application d'un mélange de réaction spumogène sur une surface de la couche de couverture dans la zone d'application à partir d'une barre de coulée (100), la barre de coulée (100) ayant une entrée (101) et comprenant un alésage formé le long d'une longueur de la barre de coulée (100) et en communication fluidique avec l'entrée (101), et avec des orifices (201) dans un côté faisant face à la surface ;
c) le déplacement continu d'une seconde couche de couverture à travers la zone d'application à une distance de la première couche de couverture, de telle sorte qu'un espace entre la première couche de couverture et la seconde couche de couverture soit rempli avec de la mousse ;
d) le déplacement des couches de couverture remplies avec la mousse jusqu'à une zone de durcissement, où la mousse se durcit et se solidifie pour produire un panneau composite avec une âme de mousse, le procédé incluant optionnellement en outre l'étape de :
e) la découpe du panneau composite en la taille et la forme souhaitées,
**caractérisé en ce qu'**une section transversale de l'alésage est sensiblement circulaire près de l'entrée (101) et devient progressivement sensiblement elliptique au fur et à mesure qu'elle se rapproche d'une extrémité (104) éloignée de l'entrée.

15. Procédé selon la revendication 14, dans lequel le mélange de réaction spumogène est à base d'isocyanate et de polyol.
